# EUROPEAN PATENT APPLICATION

(11) **EP 1 260 387 A2**
(43) Date of publication of application: **27.11.2002**
(21) Application number: 02100494.0
(22) Date of filing: 15.05.2002
(51) Int. Cl.: B60C 13/00

(54) **Tire sidewall**

(30) Priority: 25.05.2001 US 865328
(71) Applicant: THE GOODYEAR TIRE & RUBBER COMPANY, Akron, Ohio 44316-0001 (US)
(72) Inventor: RATLIFF, Jr, Billy Joe, 44319, Akron (US)
(74) Representative: Leitz, Paul

(57) **Abstract**

A sidewall (12) has bands of adjacent fields (13A, 13B, 13C, 13D, 13E, 13F) of serrations. The fields each have similarly oriented ridges (20A, 20B, 20C, 20D, 20E or 20F); adjacent fields have different cross sectional geometries creating a unique contrasting appearance. The relative difference in contrast is fundamentally the same regardless of the viewers' perspective.

## Description

### Technical Field

This invention is particularly applicable to the sidewalls of rubber tires. More specifically this invention relates to at least two distinct fields of serrations forming design patterns used on the surface of a tire sidewall, the patterns each comprising pluralities of parallel ridges oriented to yield a striking visual appearance.

### Background of the Invention

Manufacturers have, for many years, placed numerals, letters, characters or other designations upon the sidewalls of tires to enhance the appearance and marketability of their products. Such markings are described in US-A-4,198,744 and 4,823,856.

The subject matter of US-A- 4,198,774, issued April 22, 1980, was invented by Roberts and Lowther. The invention describes the use of lineal projections, which are substantially straight, parallel, and of substantially identical cross section to form indicium. An indicium is described as a letter or numeral or the like.

The latter issued patent of Mr. Charles W. Roberts, US-A- 4,823,856, issued April 25, 1989, describes the use of serrated outline markings for the sidewall of a tire. The invention relates to a design of a substantially flat ungrooved portion surrounded by a serrated portion, which includes a plurality of ribs separated by grooves.

US-A- 5,303,758 taught the use of at least two distinctive design patterns, which improves the visual appearance of an opaque article by increasing the visual contrast of the surfaces of articles. The invention was particularly well suited for the sidewall of a tire, particularly a black sidewall tire. The combination of design patterns in at least one embodiment of that invention, had the effect of making the sidewall markings boldly stand out when viewed from an angular perspective of 60° or less relative to a plane parallel to the sidewall wall of the tire. The design patterns uniquely changed in contrast relative to each other in an inverse relationship as a function of the position of the tire. Unfortunately, the changing contrast meant that the casual observer reading the lettering on the tire sidewall was forced to change his perspective to read the entire name of the tire or its manufacturer. The present invention dramatically has improved the ability of the tire observer to read an entire tire sidewall without causing the observer to change his perspective. In one embodiment the sidewall is divided in adjacent fields or different contrast such that the entire sidewall design pattern in strikingly more distinctive wherein each contrasting adjacent sector enables the reader of the tire sidewall to better appreciate the message the tire manufacturer was trying to convey on its tire sidewall without the difficulty experienced with the prior art tires. A tire sidewall has an annular outer or exterior surface, the annular outer surface has a paralellity of adjacent fields of serrations. These serrations are formed by a plurality of parallel ridges. The tire sidewall has a first field of serrations, the serrations having ridges within the first field of similar cross section and spacing. An adjacent second field of serrations has ridges parallel to the ridges of the first field. The ridges of the second field have the ridges being of similar cross section and spacing. Each field has a different geometric cross section creating a contrasting appearance relative to the adjacent fields. Each field reflects light at different angles creating a relative difference in contrast between adjacent fields. Between the adjacent fields the relative difference in contrast is maintained regardless of the perspective of the observer.

### Summary of the Invention

A tire sidewall has an annular outer or exterior surface, the annular outer surface has a plurality of adjacent fields of serrations. These serrations are formed by a plurality of parallel ridges. The tire sidewall has a first field of serrations, the serrations having ridges within the first field of similar cross section and spacing. An adjacent second field of serrations has ridges parallel to the ridges of the first field. The ridges of the second field have the ridges being of similar cross section and spacing. Each field has a different geometric cross section creating a contrasting appearance relative to the adjacent fields. Each field reflects light at different angles creating a relative difference in contrast between adjacent fields. Between the adjacent fields the relative difference in contrast is maintained regardless of the perspective of the observer.

The ridges of adjacent fields are different in geometric cross section relative the ridges of another adjacent field by differing in one or more of the following variables:
the spacing of the ridges;
the height or depth of the ridges;
recessed or projected ridges relative to the sidewall surface;
the angle of the ridge walls; or
the cross sectional shape of the ridge within the field.

The spacing of the ridges of a field can be varied in the number of parallel ridges per 10° of arc length with respect to each adjacent field by at least one ridge per 10° of arc length. Generally, the ridges are spaced within the field such that there are at least eight ridges per 10° of arc length. Preferably the ridges in a particular field are substantially triangular or trapezoidal in cross section. These ridges have sloping walls as measured in the cross section. The slope is measured as the included angle between opposing groove walls and is generally between 100 degrees or less.

In one embodiment, the ridges in each adjacent field are of the same depth or height relative to the ridges in the other adjacent fields. In another embodiment, the adjacent fields are circumferentially adjacent. In another alternative the embodiment, the adjacent fields have one or more fields overlaying a portion of another field. Throughout the invention, the parallel ridges can be selected from a group of straight, curved, wavy, zigzagged, or otherwise linearly extending ridges.

### Definitions

"Angle of Incidence" means the angle formed by a line from a ray of light falling on a surface and a perpendicular arising from the point of incidence.

"Axial" and "axially" means the lines or directions that are parallel to the axis of rotation of the tire.

Circumferential" means lines or directions extending along the perimeter of the surface of the annular tread perpendicular to the axial direction.

"Light deflection" means that as light strikes a surface, the reflected light is angularly directed relative to the angle of incidence of the light source yielding what appears to be a light absorbing characteristic to an observer who is positioned in general alignment with the angle of incidence.

"Light reflection" means that as light strikes an object, the reflected light is generally aligned with the angle of the incidence yielding what appears to be a shiny or reflective characteristic to an observer who is positioned in general alignment with the angle of incidence.

"Radial" and "radially" means directions radially toward or away from the axis of rotation of the tire.

"Sidewall" means that portion of a tire between the tread and the bead.

"Tread" means that portion of the tire that comes into contact with the road under normal inflation and load.

### Brief Description of the Drawings

The invention will be described by way of example and with reference to the accompanying drawings in which:
Figure 1 is a plan view of a tire sidewall showing an embodiment of the invention having a plurality of fields of serrations within each field there are substantially parallel adjacent ridges of similar cross section and spacing, in each adjacent field the adjacent ridges are substantially similarly oriented to but have a different geometric cross section.
Figure 2 is another embodiment of the invention shown in plan view.
Figure 3 is still another embodiment of the invention shown in plan view.
Figures 4A through 4F are cross sectional views of the fields of serrations as taken from the Figure 1 embodiment of the invention wherein the ridges as illustrated are the same depth or height but different in cross section.
Figures 5A through 5D are cross sectional views of the fields of serrations showing different cross sections having different heights or depths
Figures 6 though 8 are plan views of a prior art tire.

### Detailed Description of the Invention

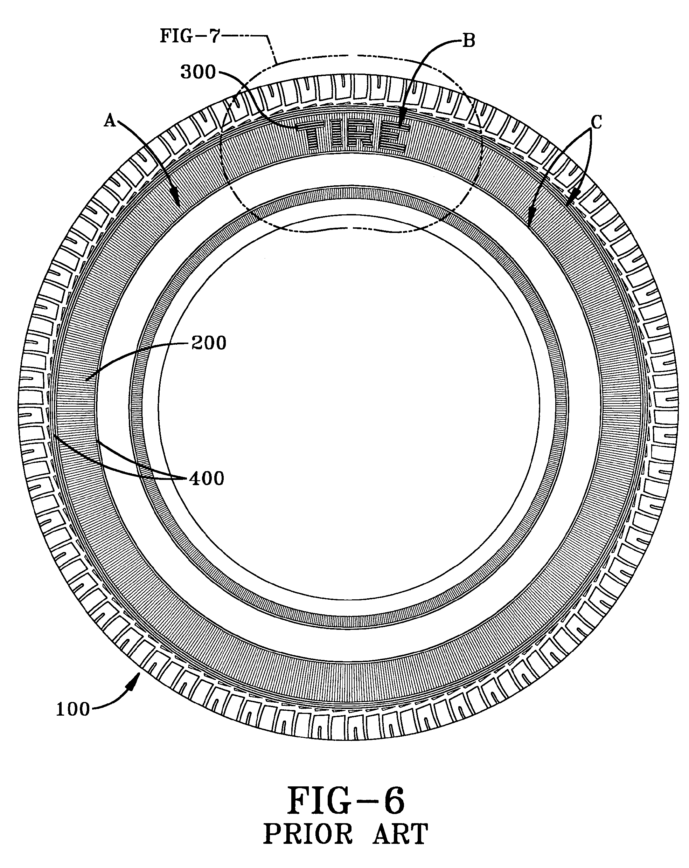

Figures 6 through 8 illustrate the prior art tire sidewall disclosed in US-A-5,303,758.

In the prior art embodiment shown in exemplary Figure 6, pattern A forms a wide decorative band comprised of ridges 200. The ridges 200 of pattern A each extends in a substantially radial direction. In the illustrated prior art embodiment, ridges 200 of pattern A extend equally in length and have similar cross sectional shapes. Each radially extending ridge 200 appears to be substantially parallel to an adjacent ridge 200.

Design pattern B as illustrated in Figure 6 is superimposed over a portion of the design pattern A. Pattern B has a plurality of parallel ridges 300 extending perpendicularly relative to the ridges 200 of the superimposed portion of pattern A.

As illustrated in Figure 6, the plurality of ridges 300 of pattern B are oriented so as to form the word TIRES, the word TIRES overlaying or being superimposed over some of the ridges 200 of pattern A. Pattern A forms a background for the pattern B markings.

As further illustrated in Figure 6, pattern C has a plurality of parallel ridges 400 perpendicularly oriented relative to the ridges 200 of pattern A and wherein the ridges 200 of pattern A intersect two ridges 400 of pattern C. In the prior art embodiment illustrated in Figure 6, pattern C consists of one or more adjacent circumferentially-continuous ridges 400 radially outward of the ridges 20 of pattern A and one or more circumferentially-continuous annular ridge 400 radially inward of the ridges 200 of pattern A.

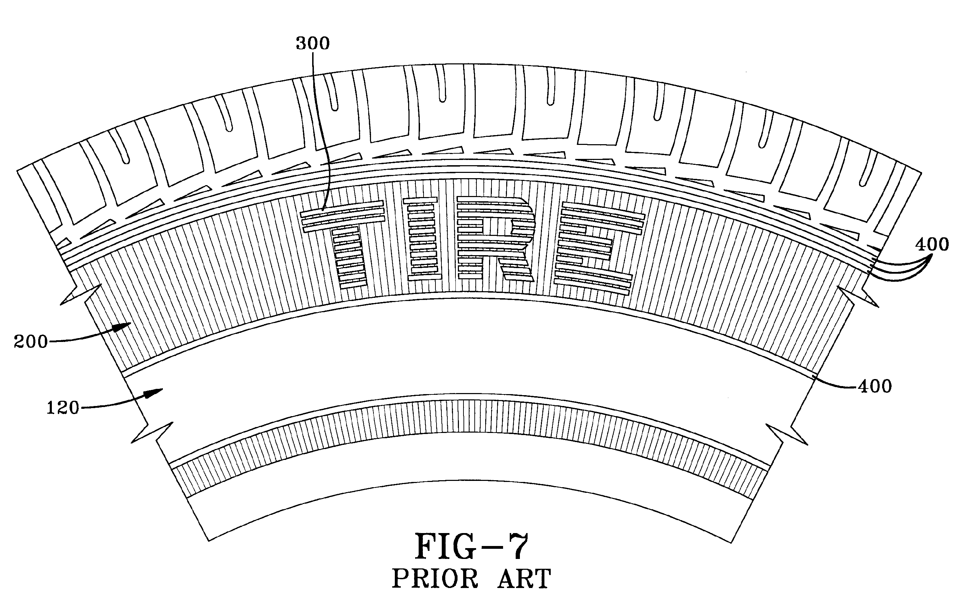

Figure 7 is an enlarged view of a portion of the prior art design patterns A, B and C. The ridges 200 of pattern A are preferable of trapezoidal shape, which approximate a triangular cross section. The bases of the trapezoidal cross sections are positioned very close or intersect such that pattern A exhibits minimal surfaces parallel to the tire sidewall 120. The use of these trapezoidal cross-sections yields a generally light deflecting or nonreflective background when viewed from a perpendicular position relative to the sidewall 120.

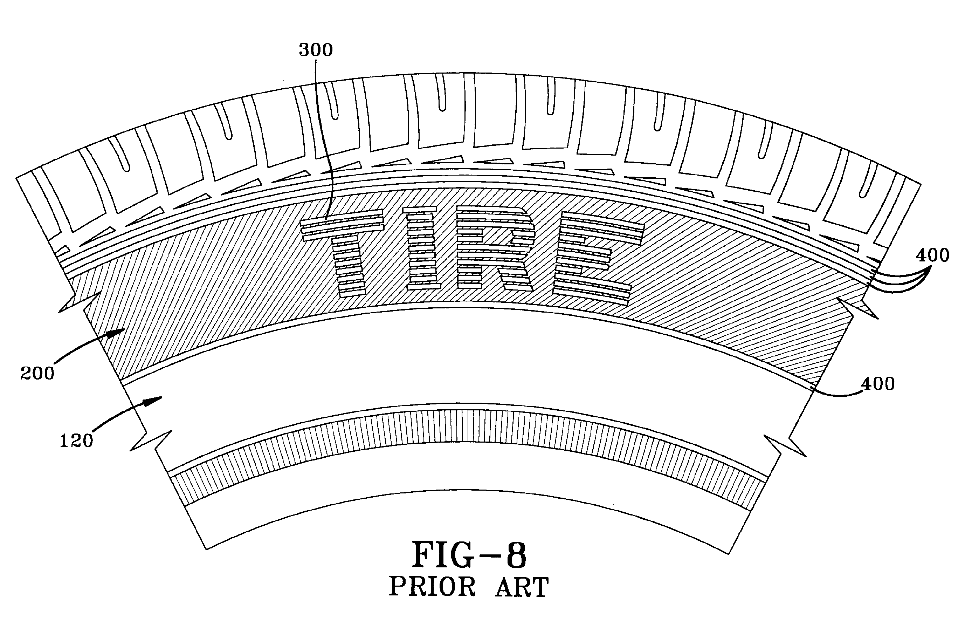

The design pattern B as illustrated at Figure 8 is comprised of plurality of ridges 300 having a trapezoidal shape approximating flat rectangular or square cross sectional shapes. The ridges are spaced a sufficient distance to provide a light shadowing space between a flat light reflecting surface. The flat surfaces yield a pattern exhibiting a light contrasting appearance whereby the observer can readily distinguish the design patterns of B which stand out when compared of the background patterns A and C.

Figure 8 illustrates a second embodiment of the prior art invention wherein the background pattern had the ridges 200 slanted. The ridges 200 as illustrated are oriented at a 45° angle relative to the radial direction. Each ridge is of equal length and substantially oriented parallel to the adjacent ridge 200. The plurality of parallel ridges 300 are superimposed over a portion of the slanted ridges 200. The ridges 300 extend generally circumferentially and are arranged in the exemplary tire sidewall of Figure 8 forming the word TIRE. The third pattern of ridges 400 is illustrated circumferentially bordering the background pattern 200. Each of the ridges 200 intersect two of the ridges 400.

This prior art invention as described above had several distinct advantages in addition to improved appearance. The ridges 300 of pattern B are believed to be preferable to a solid indicium because the use of multiple ridges tend to mask or conceal slight molding imperfections. A solid indicium tends to highlight any small imperfection because the observer's attention is drawn to the imperfection.

A second benefit of the prior art invention is that the intersections of the ridges 200 of pattern A with the annular ridges 300 of pattern B and the ridges 400 of pattern C provide improved venting of entrapped gases. The improved venting greatly minimizes the occurrence of surface blemishes that occur as a result of entrapped gases during the molding process.

The combination of reduced occurrence of surface blemishes and the masking of those that might occur greatly reduces the potential of producing a cosmetically unacceptable product.

The visual appearance of the prior tire 100 was an improvement over the commercially available products. The design pattern B yielded a striped character having a dynamic visual impression. The wide decorative band formed by pattern A provided a background, which enhanced the characters formed by pattern B. The wide decorative band of pattern A had changing light reflection characteristics as a function of tire position and the observer's perspective view. The ridges 200 of pattern A tended to deflect light at the top and bottom of the tire while exhibiting a shiny appearance to the left or right.

It has been observed that a tire made according to the prior art invention has characters of changing visual appearance as a function of the observer's position relative to the tire. In particular, when the observer looks at the tire sidewall from an angular perspective and when pattern B is oriented at either 90° or 270° relative to the top of the tire, the characters of pattern B appear dark against the shiny or highly light reflective pattern A yielding a high contrast with the background. When pattern B is at 0° or 180°, the pattern B appears light against the dark pattern A yielding an inverse contrast opposite to the light reflective appearance when pattern B is the 90° or 270° position. This changing visual appearance ads to the unique aesthetic quality and appeal of this prior art sidewall design

The other prior art tires of the past were designed to maximize contrast by using a combination of protruding flat letters or outlined lettering on a flat background, striped letters on a flat background, or flat letters on a striped background. The use of striped lettering in combination with a striped background as described above achieved a novel contrast changing appearance unachieved in earlier tire sidewall marking, but at the sacrifice of maximizing the contrast.

The prior art tire 100 of Figure 6 through 8 although a good advancement had one significant drawback. The background pattern 200 being radially inclined or extending meant that as one viewed the lettering or markings around the tire the background was progressively changing in contrast. This meant that from any given angular perspective one optimum contrast point was achieved and as one deviated from the given angle the contrast between the lettering and the background became less pronounced in appearance. If the word spelled out were large the circumferential extent of the combination of letters would make it difficult to read the entire word at a glance. As noted above the lettering was contrasted differently around the tire

An object of the present invention is to provide a tire sidewall background achieving the light contrasting benefit in a novel was such that all the lettering within the entire sidewall or a large sector could be read at a glance.

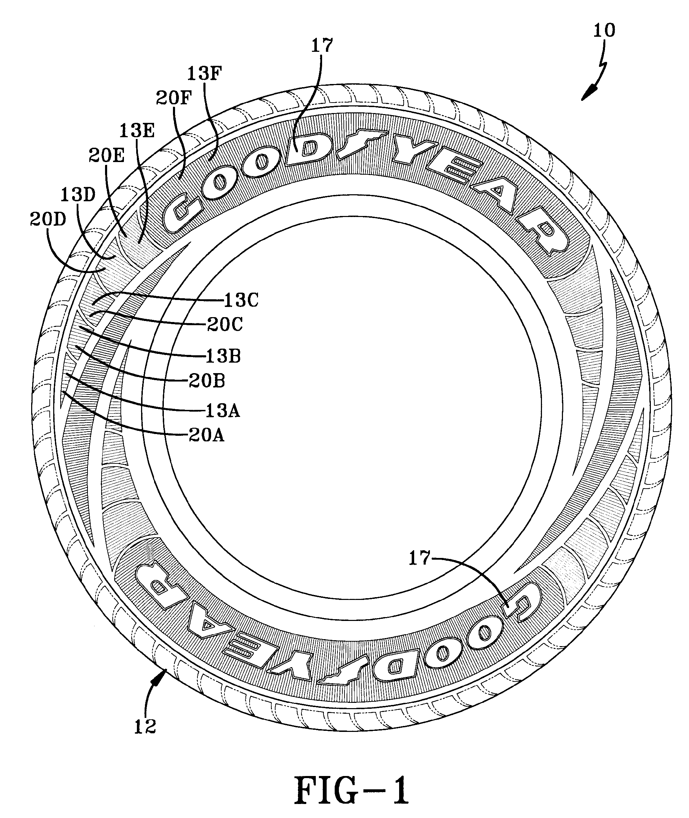

In Figure 1 a first embodiment of the invention illustrates an exemplary tire 10 having a sidewall 12. The sidewall 12 has two wide decorative bands 13. The wide bands 13 are divided into eleven fields of serrations, two each of fields 13A, 13B, 13C, 13D, 13E, and one central field 13F. As illustrated, the fields of serrations each have a plurality of distinct ridges 20A, 20B, 20C, 20D, 20E, and 20F forming a respective field of serrations, the combination of the adjacent fields form the wide decorative band 13. Superimposed over or lying within the ridges 20F of the central field 13F within each band is a second design pattern 17 comprised of numerals, letters or other indicia. The illustrated sidewall 12 is such that maximum contrast of the lettering 17 is achieved by using a smoothed surface lettering. A unique light reflection is achieved by a novel arrangement of the adjacent fields 13A through 13F of ridges 20A through 20F, which form the background pattern of the wide decorative band 13.

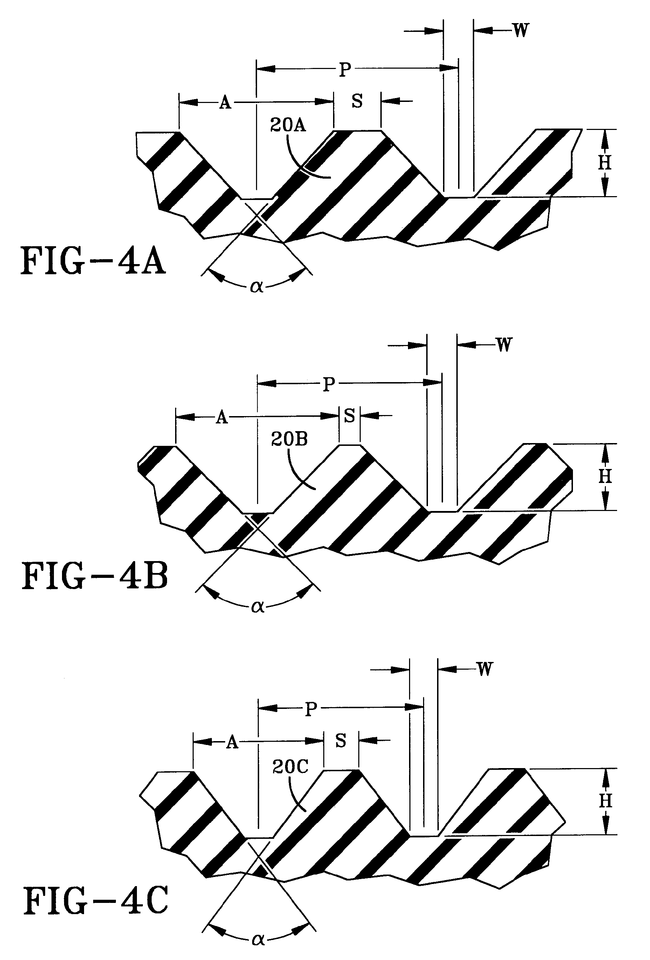

As illustrated in Figure 1, a field 13A has ridges 20A oriented in a substantially radially extending direction from the axis of the tire. When viewed in cross section, the ridges 20A of the field of serrations 13A are substantially trapezoidal in cross section as illustrated in Figure 4A. As shown, there are approximately 21 ridges per 10° of arc length as shown, each ridge 20A has a height (or depth) that is measured from the surfaces of approximately 0.030 inches (0.76 mm). Each ridge 20A is spaced at a pitch P of approximately 0.091 inches (2.3 mm). At the space W between the base of each trapezoidal cross section is a flat surface measuring approximately 0.012 inches (0.3 mm). The gap A at outer surface of each trapezoidal ridge is approximately 0.068 inches (1.7 mm). The included angle α between opposing faces of the ridge walls is approximately 86°. Next to the field 13A is a field 13B. The field 13B has a plurality of ridges 20B. The ridges 20B are substantially radially extending within the field. It is important to note that throughout the specification, the invention describes having ridges that are substantially oriented similarly within the field. This definition is intended to mean that the adjacent ridges appear substantially parallel. However, it is understood that radial ridges as they extend around the circumference of the tire changes angle of orientation. As a result, in fields that are fairly large in circumference the ridges at the starting point may be at a completely different angular orientation relative to the ridges at the opposite end of the field. For the purposes of this invention it is sufficient that the adjacent ridges are considered to be parallel or similarly oriented and that it is understood that they may change the orientation as you progress around the circumference. This means that when one sees a band of ridges 13 as shown in Figure 1, all extending substantially radially they are to be considered parallel adjacent ridges to the extent that each adjacent ridge is substantially parallel in its appearance not withstanding the mathematical fact that radial lines all extend from the same point of origin. However, because they are sufficiently outward on the tire sidewall they give the appearance of being parallel to each adjacent ridge. For clarity, it is understood that when the fields have radially extending ridges as in the embodiment shown in Figure 1 that the other adjacent fields also have radially extending ridges. Effectively this means that in each field that the linear extension of the ridge should be similar in orientation whether it be a zigzag, a curved line, an S configuration or a radial extension. What makes the contrast appearance different in the adjacent fields is that each of the ridges of adjacent fields has a different cross section, width, or spacing relative to the ridges of the adjacent field. This creates a different geometric cross section in each field yielding a contrasting appearance relative to the adjacent fields. This difference can be achieved by having each field reflect light to different angles creating a relative difference in contrast between adjacent fields the relative difference in contrast is maintained regardless of the viewer's perspective. It has been determined that the ridges of adjacent fields can be different in geometric cross section relative to the ridges of another adjacent field by differing one or more of the following variables: the spacing of the ridges; the height or depth of the ridges; having the ridges recessed in or projected out relative to the sidewall surface; the angle of the ridge walls can be changed; where the resulting effect is the cross sectional shape of the ridge can be altered in adjacent fields to create the contrasting appearance between adjacent fields. With reference to Figure 4B, the cross section of the ridges in field 13B is shown wherein the trapezoidal ridges 2B have a repeating pitch P of approximately 0.082 inches (2 mm), the space W between the base of the ridges 20B has a width of 0.012 inches (0.3 mm) and the gap A at the peak amplitude of the ridge is 0.072 inches (1.8 mm). In this configuration the groove walls have an included angle α of 90° and the ridge height H is 0.030 inches (0.76 mm), this is the same as the ridge height of the adjacent field 13A.

Moving onto field 13C of Figure 4C, it is important to note that the groove pitch P is 0.058 inches (1.47 mm). The spaces between the base of the ridges is shown at 0.012 inches (0.3 mm) and the included angle α has been changed to 75° while the peek-to-peek amplitude is 0.074 inches (1.87 mm). Again, the height H of the ridge is 0.030 inches (0.76 mm). In this embodiment there are 25 serrations or ridges per 10° of arc length. This is compared to the 23 serrations per 10° of arc length and the Figure 4B of field 13B.

With reference to Figure 4D, the ridges 20D are spaced at 29 ridges per 10° of arc length and the ridges have become more triangular and less trapezoidal having a flat S at the top of the ridge of 0.005 inches (0.127 mm) and at the interior space W between the base of the ridges is a radius R of 0.005 inches. Again, the depth or height H of the ridge 20D is shown as 0.030 inches (0.76 mm). The pitch P is shown as 0.065 inches (1.65 mm), whereas, the included angle α between the opposing groove wall faces is at 86°.

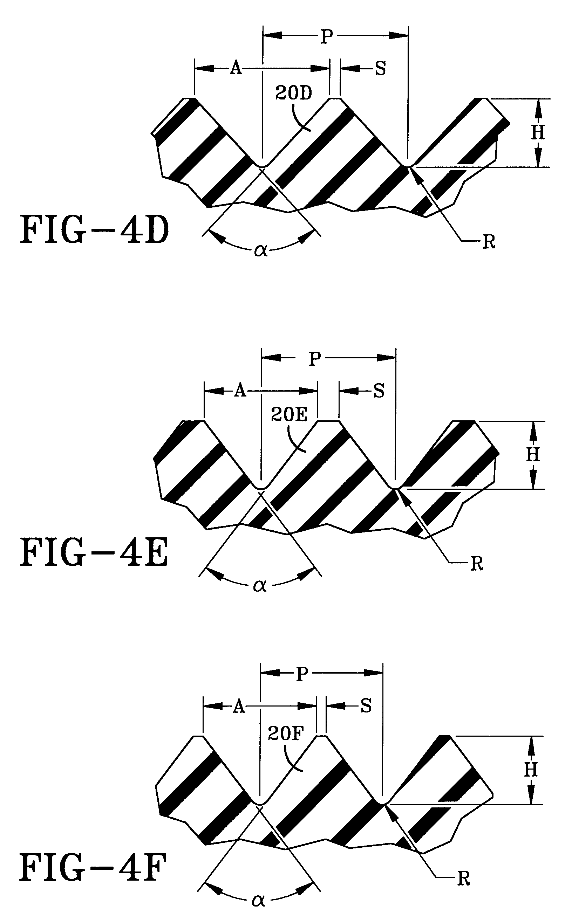

With reference to Figure 4E, the ridges 20D are spaced at 31 ridges per 10° of arc length. They have a height H of 0.030 inches (0.76 mm) as in each of the other fields and they have a space S between the base being a radius R of 0.005 inches (0.127 mm). The pitch P between adjacent ridges is 0.061 inches (1.55 mm). The top of the ridge 20E is truncated and has a flat surfaces of 0.010 inches (0.25 mm). The included angle α between opposing faces of groove walls is 75° in this field.

With regard to the serrations in the center field 13F it is noted that the serrations are spaced at 33 serrations per 10° of arc length. In this field the ridges 20F have a pitch P spacing of 0.056 inches (1.42 mm). They have a truncated top having a top flat surface S of 0.005 inches (0.127 mm). A bottom space is a radius R of 0.005 inches and the height H (or depth) of the ridges is also 0.030 inches (0.76). The included angle α between these ridges is 75°.

As can be easily appreciated, the adjacent fields 13A, 13B, 13C, 13D, 13E and 13F progressively become substantially closer spaced as one progresses from an extremity or end of the band 13 towards the central portion of the band 13. The center field 13F has the lettering 17 superimposed. In the embodiment illustrated, this pattern of fields 13A, 13B, 13C, 13D, and 13E is then repeated in reverse order on the opposite end of field 13F creating extremes that are identically matched in appearance at both ends of the band 13.

As can be easily appreciated from the figures the band's fields that have widely spaced ridges 20A appear to be light in appearance and as one progresses through the adjacent fields more ridges are added and the bands become darker in appearance such that the relative contrast is from light to dark as one progresses around the band 13 until it reaches the center and then the bands progressively get lighter again matching the corresponding geometric shape and spacing of the ridges of the matching fields on the other side of the band and achieving an almost constant relative difference in light contrast regardless of the perspective of the viewer. As one can easily observe, this tends to highlight the area in which the trademark or brand name of the tire is located enhancing the visual appearance and directing the observer's eye to that portion of the sidewall wherein the company's name, or brand name of the tire, is prominently displayed.

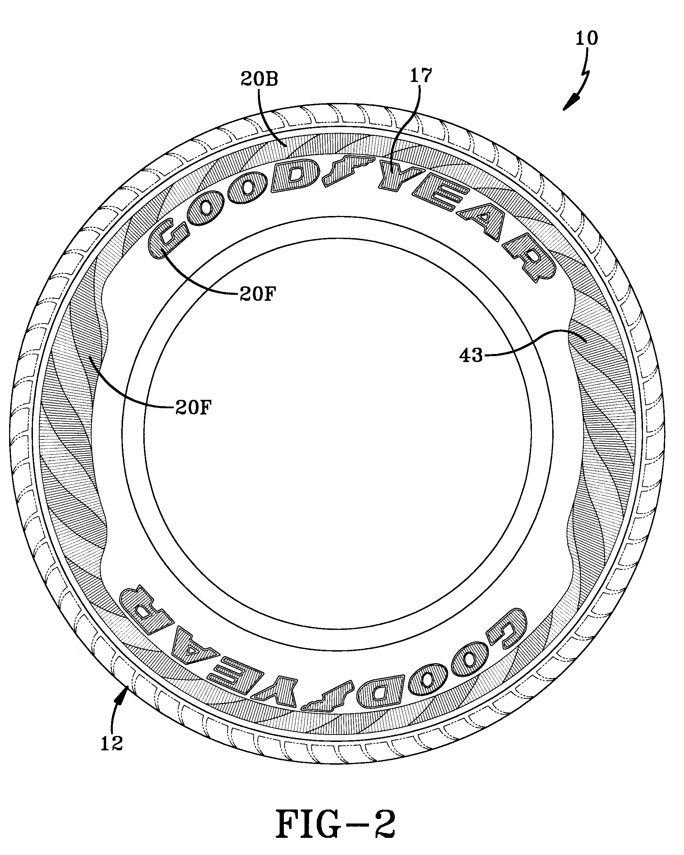

With reference to Figure 2 another embodiment of the invention is shown in plan view wherein the band 43 is shown circumferentially extending around the entire circumference of the sidewall. The band varying radially outwardly in locations where the company brand name or logo is prominently displayed against the background of the smooth surface. In that embodiment only two fields of ridges 20B, 20F are used adjacently as illustrated, the fields circumferentially overlap such that the ridges actually are similarly oriented and yet because of the different geometric cross section employed, one receives a contrasting appearance of dark to light to dark to light by simply employing the techniques previously discussed. For exemplary purposes the ridges 20B, 20F selected in this embodiment are the same as those founds in fields 13F and 13B of the embodiment of Figure 1.

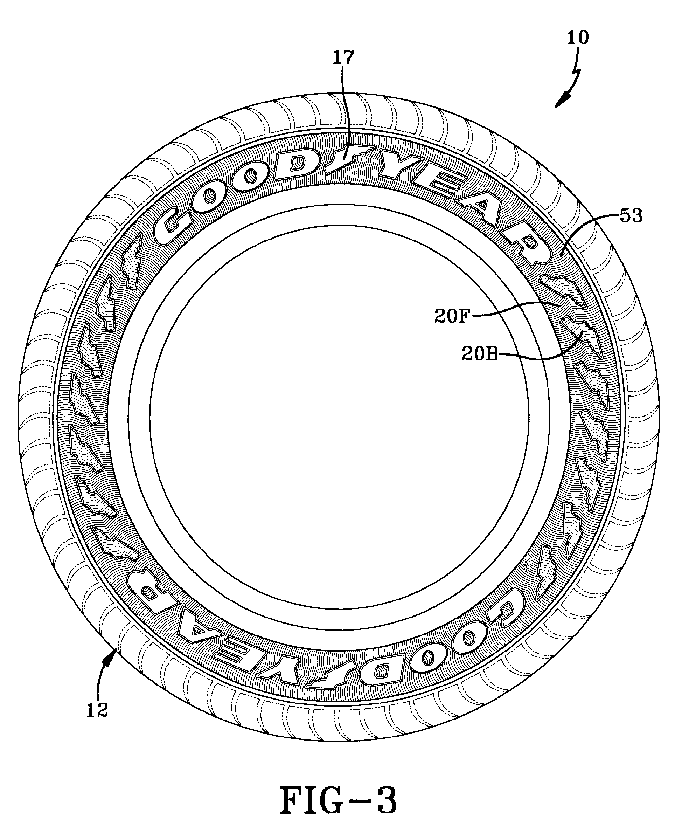

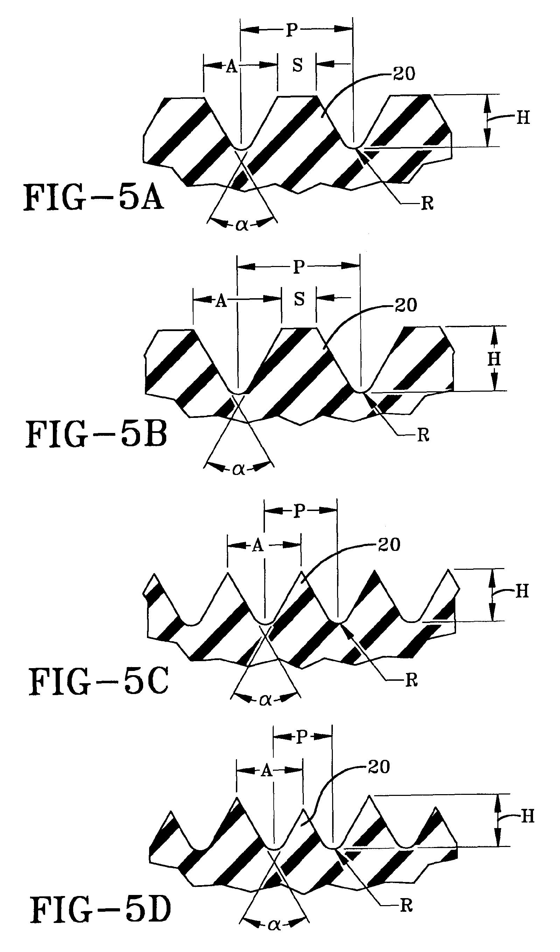

Figure 3 shows still another embodiment of the invention shown in plan view wherein the band 53 has the first field comprising a serration type or field that extends around the entire circumference of the tire while the second field is shown in a repeating pattern around the tire creating a very subdued difference in contrast. The reason there is a mild or very subtle difference in contrast relative to the band is that the field of type one effectively is the same as 13F wherein the field of ridges 20F of the adjacent repeating field is of a field having ridges 20B similar to the type 13B of previously discussed band 13 of Figure 1. The cross sectional difference is less and the number of ridges per circumferential arc length is not a large difference thus the amount of contrast is reduced. This effectively creates a subtle pattern wherein the contrast is subdued so that the products name can stand out as the bold letters while company logo can be provided as a very subtle pattern repeating around the tread. As can be appreciated from the various embodiments it is possible to make a striking difference in the sidewall appearance of the opaque or black tire in a unique way in which the contrast difference between adjacent fields is maintained regardless of the orientation or perspective of the observer. This was a fundamental problem in the prior arc tires however, this matter has been resolved creating a new and distinctive way of producing a sidewall that has a dramatic new appearance. What one observes when looking at this pattern is a contrast caused by using different geometric shapes and sizes of ridges as illustrated in Figures 5A, 5B, 5C, and 5D. The tire designer can, by increasing the spacing between ridges create a rather light appearance. As he increases the number of ridges within the given space the appearance darkens. When viewing the tire, this is similar to setting one's printer such that the dots per square inch are decreased in such a fashion that a black appearing symbol is shaded to a light gray symbol. Unlike a printer however, this is accomplished by maintaining a linear projection whether it be straight, curved or zigzag or any other shape of the ridge such that they are fundamentally similar in the background pattern throughout the band such that each adjacent field has ridges of a similar orientation, and yet, the difference in cross sectional geometries of the ridges within the fields creates patterns of distinctly different contrast.

It is sometimes desirable to outline the fields with a continuous border ridge or the entire band. As is commonly done with the lettering for additional boundary demarcation.

## Claims

1. A tire sidewall (12) has an annular outer surface with a plurality of adjacent fields of serrations (13A, 13B, 13C, 13D, 13 E, 13F), the serrations being formed by a plurality of substantially similar oriented adjacent ridges (20A, 20B, 20C, 20D, 20E, 20F), the tire sidewall being **characterized in that**
a first field of serrations has the ridges within the field of similar cross section and spacing; **in that**
an adjacent second field of serrations has the ridges within the field of similar cross section and spacing, the ridges of the second field being similarly oriented relative to the ridges of the first field; and **in that**
the ridges in adjacent fields have a different geometric cross section, creating thereby a contrasting appearance.

2. The tire sidewall of claim 1 wherein each field (13A, 13B, 13C, 13D, 13E, 13F) affects light at different angles creating a relative difference in contrast between adjacent fields, the relative difference in contrast is maintained regardless of the perspective.

3. The tire sidewall of claim 1 or 2 wherein the ridges (20A, 20B, 20C, 20D, 20E, 20F) of adjacent fields (13A, 13B, 13C, 13D, 13 E, 13F) are different in geometric cross section relative to the ridges of another adjacent field, by differing in one or more of the following variables:
a) the spacing (P) of ridges;
b) the height (H) or depth of the ridges;
c) recessed in or projected out of the sidewall;
d) the angle (α) of the ridge walls; or
e) the cross sectional shape of the ridge.

4. The tire sidewall of claim 3 wherein the spacing (P) of ridges (20A, 20B, 20C, 20D, 20E, 20F) varies in the number of parallel ridges per 10° of arc length in each adjacent field (13A, 13B, 13C, 13D, 13 E, 13F) by at least one ridges per 10° of arc length.

5. The tire sidewall of claim 4 wherein the ridge spacing within a field (13A, 13B, 13C, 13D, 13 E, 13F) is at least 8 ridges per 10° of arc length.

6. The tire sidewall of claim 3 wherein the ridges (20A, 20B, 20C, 20D, 20E, 20F) in one field are substantially triangular or trapezoidal in cross-section.

7. The tire sidewall of claim 3 wherein the ridges (20A, 20B, 20C, 20D, 20E, 20F) have sloping walls as measured in cross section, the slope between opposing groove walls being 100° or less.

8. The tire sidewall of claim 3 wherein the ridges (20A, 20B, 20C, 20D, 20E, 20F) in at least two adjacent fields (13A, 13B, 13C, 13D, 13 E, 13F) differ by their depth or height.

9. The tire sidewall of claim 2 wherein the adjacent fields (13A, 13B, 13C, 13D, 13 E, 13F) have one or more fields overlaying or lying within a portion of another field.

10. The tire sidewall of any of claims 1-9 wherein the parallel ridges (20A, 20B, 20C, 20D, 20E, 20F) are selected from a group of straight, curved, wavy or zigzag linearly extending ridges.
